# EUROPEAN PATENT SPECIFICATION

(11) **EP 4 024 568 B1**
(45) Date of publication and mention of the grant of the patent: **08.04.2026**
(21) Application number: 21850765.5
(22) Date of filing: 12.07.2021
(51) Int. Cl.: H01M 10/653, H01M 10/613, H01M 50/24, H01M 10/647, H01M 50/20

(54) **BATTERY PACK AND METHOD OF MANUFACTURING THE SAME**
BATTERIEPACK UND HERSTELLUNGSVERFAHREN DAFÜR
BLOC-BATTERIE ET SON PROCÉDÉ DE FABRICATION

(30) Priority: 29.07.2020 KR 20200094334
(43) Date of publication of application: 06.07.2022
(73) Proprietor: LG ENERGY SOLUTION, LTD., Seoul 07335 (KR)
(72) Inventor: PARK, Subin, Daejeon 34122 (KR); SEONG, Junyeob, Daejeon 34122 (KR); PARK, Won Kyoung, Daejeon 34122 (KR)
(74) Representative: Plasseraud IP
(86) International application number: PCT/KR2021/008912
(87) International publication number: WO 2022/025483

(56) References cited:
- WO-A1-2020/066060
- WO-A2-2020/100102
- KR-A- 20130 004 141
- KR-A- 20140 121 767
- KR-A- 20150 054 289
- KR-A- 20160 016 543
- KR-A- 20160 016 543
- KR-A- 20200 015 207
- KR-A- 20200 015 207
- KR-B1- 102 057 232
- US-A1- 2016 329 617

## Description

### [TECHNICAL FIELD]

### Cross Citation with Related Application(s)

This application claims the benefit of Korean Patent Application No. 10-2020-0094334 filed on July 29, 2020 with the Korean Intellectual Property Office.

The present disclosure relates to a battery pack and a method of manufacturing the same, and more particularly, to a battery pack with improved insulation performance and cooling efficiency and a method of manufacturing the same.

### [BACKGROUND]

With the increase of the technological development and demand for a mobile device, demand for a secondary battery as an energy source is rapidly increasing, and accordingly, many researches of the battery capable of meeting a variety of needs are emerging.

A secondary battery has attracted considerable attention as an energy source for powerdriven devices, such as an electric bicycle, an electric vehicle, and a hybrid electric vehicle, as well as an energy source for mobile devices, such as a mobile phone, a digital camera, and a laptop computer.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle- or large-sized battery module is preferably produced so as to have as small a size and weight as possible. Consequently, a prismatic battery, a pouch-shaped battery or the like, which can be stacked with high integration and has a small weight relative to capacity, is mainly used as a battery cell of the middle or large-sized battery module. Meanwhile, in order to protect the battery cell stack from external impact, heat or vibration, the battery module may include a module frame that houses the battery cell stack in an internal space.

Document WO2020/066060A1 shows a battery pack from the prior art.

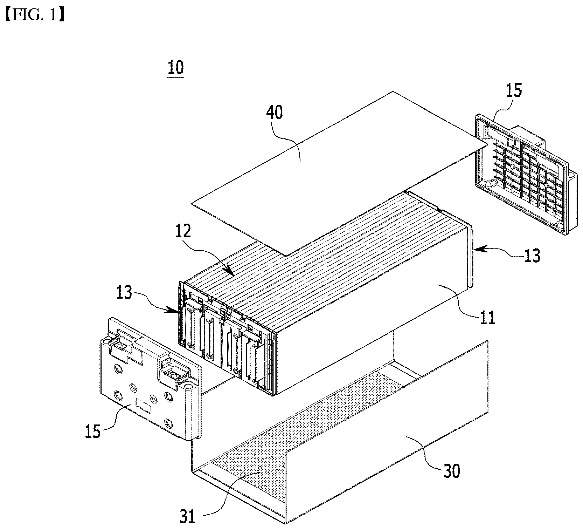

Fig. 1 is an exploded perspective view illustrating a conventional battery module. Referring to Fig. 1, a conventional battery module 10 includes a battery cell stack 12 containing a plurality of battery cells 11, a U-shaped frame 30 of which an upper surface, a front surface, and a rear surface are opened, an upper plate 40 for covering the upper part of the battery cell stack 12, end plates 15 each locating on the front surface and the rear surface of the battery cell stack 12, and a busbar frame 13 located between the battery cell stack 12 and the end plate 15. In addition, the battery module 10 includes a heat conductive resin layer 31 located between the U-shaped frame 30 and the battery cell stack 12. The heat conductive resin layer 31 is a kind of heat dissipation layer, which can be formed by applying a material having a heat dissipation function.

At this time, the cooling surface of the battery cell 11 is a surface in direct contact with the heat conductive resin layer 31, and there is a risk of damage to the surface. Since the heat conductive resin layer 31 conventionally used is not guaranteed to have insulation performance, there is a problem that an insulation issue occurs when the battery cell 11 is damaged.

### [DETAILED DESCRIPTION OF THE INVENTION]

### [Technical Problem]

It is an object of the present disclosure to provide a battery pack with improved insulation performance and cooling efficiency and a method of manufacturing the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery pack according to claim 1.

The heat conductive resin layer may come into direct contact with the lower pack housing.

The plurality of module regions may be partitioned by a plurality of partition walls formed within the lower pack housing, and the partition walls may be located between adjacent battery cell stacks among the plurality of battery cell stacks.

The heat conductive resin layer may include a first heat conductive resin layer and a second heat conductive resin layer, the plurality of module regions may include a first region and a second region that are partitioned from each other by the partition wall, the first heat conductive resin layer may be formed so as to correspond to the first region, and the second heat conductive resin layer may be formed so as to correspond to the second region.

The battery pack may further include an upper pack housing that covers the plurality of battery cell stacks.

According to another embodiment of the present disclosure, there is provided a method of manufacturing a battery pack according to claim 7.

The plurality of module regions may be partitioned by a plurality of partition walls, and the battery cell stack may be mounted between the partition walls adjacent to each other.

A thickness of the adhesive layer may be formed to be thinner than the thickness of the heat conductive resin layer.

### [ADVANTAGEOUS EFFECTS]

According to embodiments of the present disclosure, an insulating adhesive can be applied to the bottom surface for cooling the battery cell stack, thus maintaining the insulation performance and at the same time improving the cooling efficiency.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view illustrating a conventional battery module;
Fig. 2 is a perspective view illustrating a battery module according to one embodiment of the present disclosure;
Fig. 3 is an exploded perspective view of the battery module of Fig. 2;
Fig. 4 is a perspective view of a battery cell included in the battery module of Fig. 2; and
Figs. 5 and 6 are perspective views illustrating a battery pack and a method of manufacturing the same according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of the description, and the present disclosure is not necessarily limited to those illustrated in the drawings. In the drawings, the thickness of layers, regions, etc. are exaggerated for clarity. In the drawings, for convenience of the description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed "on" or "above" the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

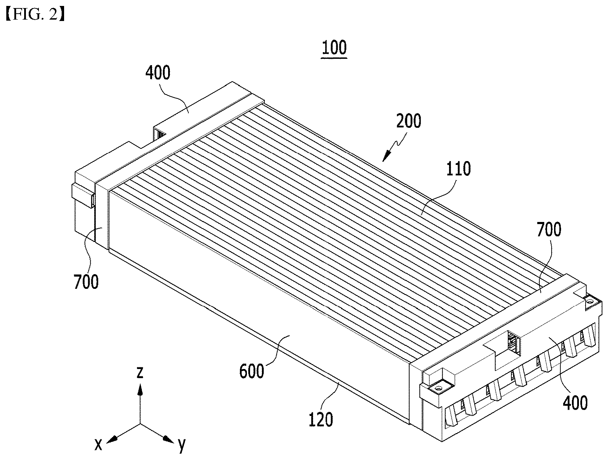

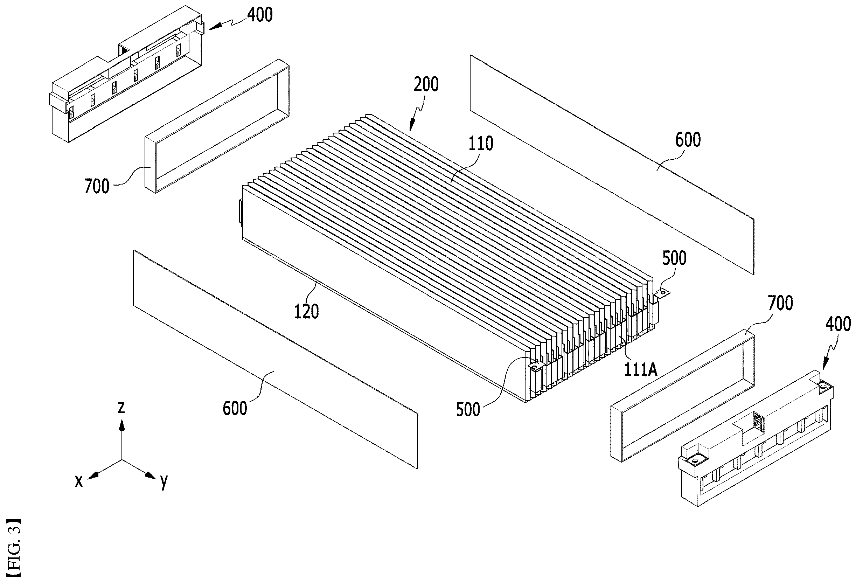

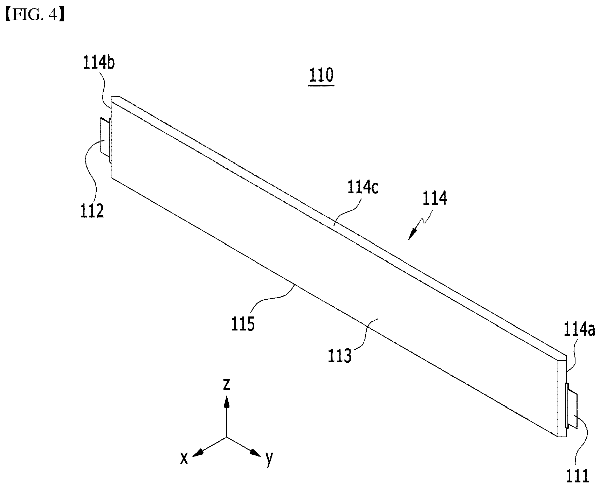

Fig. 2 is a perspective view illustrating a battery module according to one embodiment of the present disclosure. Fig. 3 is an exploded perspective view of the battery module of Fig. 2. Fig. 4 is a perspective view of a battery cell included in the battery module of Fig. 2.

Referring to Figs. 2 to 4, a battery module 100 according to one embodiment of the present disclosure includes a battery cell stack 200 in which a plurality of battery cells 110 are stacked.

First, the battery cell 110 is preferably a pouch-type battery cell, and may be formed into a rectangular sheet-like structure. For example, the battery cell 110 according to the present embodiment has a structure in which two electrode leads 111 and 112 protrude from one end part 114a and the other end part 114b which are disposed on the opposite sides to each other in reference to the cell body 113, respectively. More specifically, the electrode leads 111 and 112 are connected to an electrode assembly (not shown) and protrude from the electrode assembly (not shown) to the outside of the battery cell 110. One of the two electrode leads 111 and 112 may be a positive electrode lead 111 and the other may be the negative electrode lead 112. That is, the positive electrode lead 111 and the negative electrode lead 112 can be projected in opposite directions to each other in reference to one battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts, the sealing part has a structure in which it is sealed by a method such as heat fusion, and the other side part may be composed of a connection part 115. The cell case 114 may be composed of a laminate sheet including a resin layer and a metal layer.

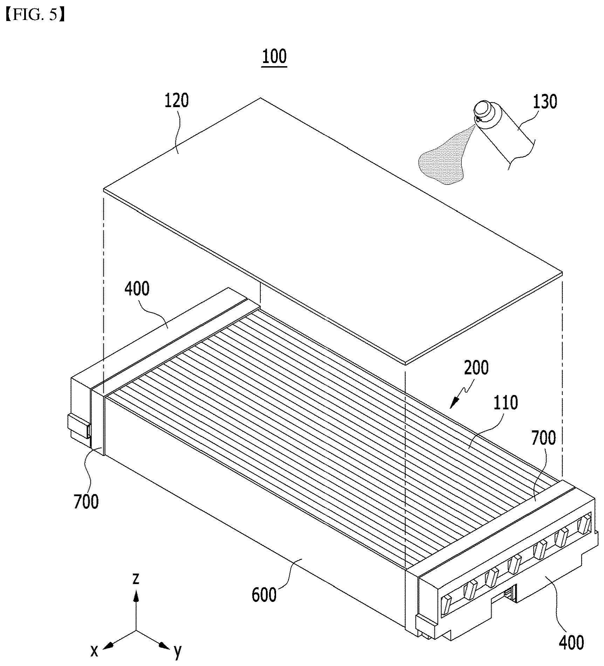

Such battery cells 110 may be formed in plural numbers, and the plurality of battery cells 110 are stacked so as to be electrically connected to each other, thereby forming a battery cell stack 200. In particular, as shown in Fig. 5, the plurality of battery cells 110 may be stacked along the x-axis direction. Thereby, the electrode leads 111 and 112 can be protruded in the y-axis direction and the -y-axis direction, respectively.

Meanwhile, the battery module 100 according to the present embodiment forms a module-less structure in which the module frame and the end plate are removed, unlike the conventional battery module described with reference to Fig. 1. Instead of the module frame, the battery module 100 according to the present embodiment may include a side face plate 600 and a holding band 700. As the module frame and the end plate are removed, complicated processes that require precise control, such as the process of housing the battery cell stack 200 inside the module frame, or the process of assembling module frames and end plates, is not necessary. Further, there is an advantage that the weight of the battery module 100 can be significantly reduced only by the removed module frame and end plate. Further, the battery module 100 according to the present embodiment has an advantage that re-workability is advantageous in the battery pack assembly process due to the removal of the module frame. In contrast, the conventional battery module 10 could not be reworked even if a defect occurs due to the welding structure of the module frame.

The side face plate 600 is a plate-shaped member and can be disposed on both side surfaces of the battery cell stack 200 to supplement the rigidity of the battery module 100. Such side face plate 600 has elastic properties and may include a plastic material manufactured by injection molding, and in some cases, a leaf spring material can be applied.

A holding band 700 is a member that wraps the battery cell stack 200 at both end parts of the battery cell stack 200, and can has a function of fixing the plurality of battery cells 110 and the side face plates 600 constituting the battery cell stack 200. After fixing the battery cell stack 200 and the side face plate 600 via the holding band 700 in this way, an insulating cover 400 can be disposed on the front surface and the back surface of the battery cell stack 200 corresponding to the direction in which the electrode leads 111 and 112 protrude. Such a holding band 700 can be composed of a material having a predetermined elastic force, and specifically, a structure of a leaf spring can be applied.

The battery module 100 according to the present embodiment further includes an adhesive layer 120 applied to the lower surface of the battery cell stack 200 as shown in Figs. 2 and 3. The adhesive layer 120 according to the present embodiment may be formed by applying an insulating adhesive material to the lower surface of the battery cell stack 200 in a thin thickness. Conventionally, the cooling surface of the battery cell stack 200 comes into direct contact with a heat conductive resin layer described later, and thereby, there was a risk of damage to the cooling surface of the battery cell stack 200. Since the heat conductive resin layer is not guaranteed to have insulation performance, an insulation issue may occur when a battery cell is damaged.

The adhesive layer 120 according to the present embodiment can cover the bottom surface of the battery cell stack 200 for cooling the battery cell stack 200, thereby maintaining the insulating performance of the battery cell stack 200 and at the same time minimizing the reduction in cooling efficiency. Preferably, the adhesive layer 120 may cover the entire bottom surface of the battery cell stack 200.

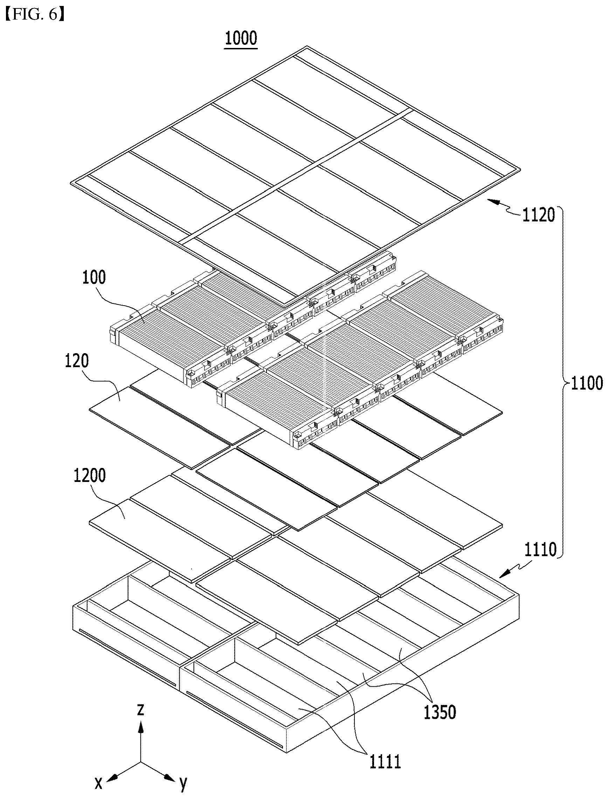

Figs. 5 and 6 are perspective views illustrating a battery pack and a method of manufacturing the same according to another embodiment of the present disclosure.

Referring to Fig. 5, an insulating adhesive spray can be injected toward the lower surface of the battery cell stack 200 in a state in which the above-mentioned battery cell stack 200 is inverted upside down. Thus, by using the spray 130 method, the adhesive layer 120 is applied as thinly as possible, thus minimizing the action of the adhesive layer 120 as a cooling resistance. The adhesive layer 120 may be formed to have a thickness thinner than a heat conductive resin layer described later.

Referring to Fig. 6, a battery pack 1000 according to one embodiment of the present disclosure may include a battery module 100 containing the above-mentioned battery cell stack 200, a pack frame 1100 for housing the battery module 100, and a heat conductive resin layer 1200 located between the battery module 100 and the bottom part 1111 of the pack frame 1100.

First, the battery module 100 includes an insulating cover as described above, and instead may form a module-less structure in which the module frame and the end plate are removed. A plurality of such battery modules 100 may be gathered and housed in the pack frame 1100 to form the battery pack 1000.

The pack frame 1100 may include a lower pack housing 1110 and an upper pack housing 1120 that covers the lower pack housing 1110, and a plurality of battery modules 100 may be disposed on the bottom part 1111 of the lower pack housing 1110. The lower pack housing 1110 has a plurality of module regions, and the plurality of module regions may be partitioned by a plurality of partition walls 1350 formed in the lower pack housing 1110. The partition wall 1350 is formed between battery modules 100 adjacent to each other among the plurality of battery modules 100. For example, the heat conductive resin layer 1200 includes a first heat conductive resin layer and a second heat conductive resin layer adjacent to each other, the plurality of module regions include a first region and a second region that are partitioned from each other by a partition wall 1350, the first heat conductive resin layer is formed so as to correspond to the first region, and the second heat conductive resin layer may be formed so as to correspond to the second region. At this time, the first heat conductive resin layer and the second heat conductive resin layer may be disposed separately from each other by the partition wall 1350.

Meanwhile, the heat conductive resin layer 1200 may be formed by applying a heat conductive resin to the bottom part 1111 of the lower pack housing 1110. The heat conductive resin may include a heat conductive adhesive material, and specifically, may include at least one of silicone material, urethane material, and acrylic material. The heat conductive resin is a liquid during application but is cured after application, so that it can perform the role of fixing the battery module 100. Further, since the heat conductive resin has excellent heat transfer properties, heat generated from the battery cell 100 can be quickly transferred to the bottom part 1111, thereby preventing overheating of the battery pack 1000.

As shown in Fig. 2, in the battery module 100 according to the present embodiment, a part of the battery cell 110 can be exposed to the outside in the module-less structure in which the module frame is removed, and it is essential to fix the exposed battery cell 110 for structural stability. Therefore, the battery pack 1000 according to the present embodiment can form a heat conductive resin layer capable of fixing the battery module 100, particularly, each battery cell 110 constituting the battery module 100, to the bottom part 1111, thereby improving the structural stability. Further, by eliminating the module frame, the heat generated from the battery cells can be directly transferred from the heat conductive resin layer to the pack frame, thereby improving the cooling efficiency. Although not shown, a heat sink structure may be formed on the pack frame.

The battery module or the battery pack according to embodiments of the present disclosure can be applied to various devices. Specifically, such a device may be applied to a vehicle means such as an electric bicycle, an electric vehicle, or a hybrid vehicle, but the present disclosure is not limited thereto, and is applicable to various devices that can use a battery module, which also belongs to the scope of the present disclosure.

Although the invention has been shown and described with reference to the preferred embodiments, the scope of the present disclosure is not limited thereto, and is defined in the appended claims.

### [Description of Reference Numerals]

| | | | |
|---|---|---|---|
| 110: | battery cell | 120: | adhesive layer |
| 200: | battery cell stack | 130: | spray |
| 400: | insulating cover | | |

## Claims

1. A battery pack (1000) comprising:
a battery cell stack (200) that is formed by stacking a plurality of battery cells (110),
an adhesive layer (120) that is applied to a lower surface of the battery cell stack (200),
an insulating cover (400) that covers both end parts of the battery cell stack (200), and
a holding member (700) that wraps both end parts of the battery cell stack (200) adjacent to the insulating cover,
a lower pack housing (1110) that has a plurality of module regions and on one of which the battery cell stack (200) is mounted, and
a heat conductive resin layer (1200) formed on the lower pack housing,
wherein the adhesive layer (120) has an insulation property and covers the entire bottom surface of the battery cell stack (200), and
wherein a battery module containing the battery cell stack (200), the insulating cover, the holding member (700), and the adhesive layer (120) is directly mounted on the lower pack housing, so that the heat conductive resin layer (1200) is located between the adhesive layer (120) and the lower pack housing, and the adhesive layer (120) abuts on the heat conductive resin layer (1200).

2. The battery pack (1000) of claim 1, wherein:
the heat conductive resin layer (1200) comes into direct contact with the lower pack housing.

3. The battery pack (1000) of claim 1, comprising a plurality of battery cell stacks (200) and wherein:
the plurality of module regions are partitioned by a plurality of partition walls (1350) formed within the lower pack housing, and the partition walls (1350) are located between adjacent battery cell stacks (200) among the plurality of battery cell stacks (200).

4. The battery pack (1000) of claim 3, wherein:
the heat conductive resin layer (1200) comprises a first heat conductive resin layer and a second heat conductive resin layer,
the plurality of module regions comprises a first region and a second region that are partitioned from each other by the partition wall,
the first heat conductive resin layer is formed so as to correspond to the first region, and the second heat conductive resin layer is formed so as to correspond to the second region.

5. The battery pack (1000) of claim 1, which further comprises a plurality of battery cell stacks (200) and an upper pack housing (1120) that covers the plurality of battery cell stacks (200).

6. The battery pack (1000) of anyone of preceding claims, wherein the adhesive layer (120) is a sprayed adhesive layer.

7. A method of manufacturing a battery pack (1000), the method comprising the steps of:
stacking a plurality of battery cells (110) to form a battery cell stack (200),
forming an insulating cover that covers both end parts of the battery cell stack (200),
forming a holding member (700) that wraps both end parts of the battery cell stack (200) adjacent to the insulating cover,
applying an adhesive material to a lower surface of the battery cell stack (200) to form an adhesive layer (120),
forming a heat conductive resin layer (1200) in a lower pack housing (1110) having a plurality of module regions, and
mounting the battery cell stack (200) in the lower pack housing (1110) so that the lower surface of the battery cell stack (200) abuts on the heat conductive resin layer (1200), wherein:
the applying an adhesive material comprises injecting an insulating adhesive spray toward the lower surface of the battery cell stack in a state in which the battery cell stack is inverted upside down.

8. The method of claim 7, wherein:
the plurality of module regions are partitioned by a plurality of partition walls (1350), and the battery cell stack (200) is mounted between the partition walls (1350) adjacent to each other.

9. The method of claim 7, wherein:
a thickness of the adhesive layer (120) is formed to be thinner than the thickness of the heat conductive resin layer (1200).

## Patentansprüche

1. Batteriepack (1000), umfassend:
einen Batteriezellenstapel (200), welcher durch Stapeln einer Mehrzahl von Batteriezellen (110) gebildet ist,
eine Haftmittelschicht (120), welche auf eine untere Fläche des Batteriezellenstapels (200) aufgebracht ist,
eine isolierende Abdeckung (400), welche beide Endteile des Batteriezellenstapels (200) bedeckt, und
ein Halteelement (700), welches beide Endteile des Batteriezellenstapels (200) umhüllt, welches benachbart zu der isolierenden Abdeckung ist,
ein unteres Packgehäuse (1110), welches eine Mehrzahl von Modulregionen aufweist, und von welchen an einer der Batteriezellenstapel (200) angebracht ist, und
eine wärmeleitfähige Harzschicht (1200), welche an dem unteren Packgehäuse gebildet ist, wobei die Haftmittelschicht (120) eine Isolationseigenschaft aufweist und die gesamte Bodenfläche des Batteriezellenstapels (200) bedeckt, und
wobei ein Batteriemodul, welches den Batteriezellenstapel (200), die isolierende Abdeckung, das Halteelement (700) und die Haftmittelschicht (120) beinhaltet, direkt an dem unteren Packgehäuse angebracht ist, so dass sich die wärmeleitfähige Harzschicht (120) zwischen der Haftmittelschicht (120) und dem unteren Packgehäuse befindet und die Haftmittelschicht (120) an der wärmeleitfähigen Harzschicht (1200) anliegt.

2. Batteriepack (1000) nach Anspruch 1, wobei:
die wärmeleitfähige Harzschicht (1200) in direkten Kontakt mit dem unteren Packgehäuse kommt.

3. Batteriepack (1000) nach Anspruch 1, umfassend eine Mehrzahl von Batteriezellenstapeln (200), und wobei:
die Mehrzahl von Modulregionen durch eine Mehrzahl von Trennwänden (1350) getrennt sind, welche in dem unteren Packgehäuse gebildet sind, und sich die Trennwände (1350) zwischen benachbarten Batteriezellenstapeln (200) unter der Mehrzahl von Batteriezellenstapeln (200) befinden.

4. Batteriepack (1000) nach Anspruch 3, wobei:
die wärmeleitfähige Harzschicht (1200) eine erste wärmeleitfähige Harzschicht und eine zweite wärmeleitfähige Harzschicht umfasst,
die Mehrzahl von Modulregionen eine erste Region und eine zweite Region umfassen, welche voneinander durch die Trennwand getrennt sind,
die erste wärmeleitfähige Harzschicht gebildet ist, um der ersten Region zu entsprechen, und die zweite wärmeleitfähige Harzschicht gebildet ist, um der zweiten Region zu entsprechen.

5. Batteriepack (1000) nach Anspruch 1, welcher ferner eine Mehrzahl von Batteriezellenstapeln (200) und ein oberes Packgehäuse (1120) umfasst, welches die Mehrzahl von Batteriezellenstapeln (200) abdeckt.

6. Batteriepack (1000) nach einem der vorhergehenden Ansprüche, wobei die Haftmittelschicht (120) eine gesprühte Haftmittelschicht ist.

7. Verfahren zur Herstellung eines Batteriepacks (1000), wobei das Verfahren die Schritte umfasst, aus:
Stapeln einer Mehrzahl von Batteriezellen (110), um einen Batteriezellenstapel (200) zu bilden,
Bilden einer isolierenden Abdeckung (400), welche beide Endteile des Batteriezellenstapels (200) abdeckt,
Bilden eines Halteelements (700), welches beide Endteile des Batteriezellenstapels (200) umhüllt, welches benachbart zu der isolierenden Abdeckung ist,
Aufbringen eins Haftmittelmaterials auf eine untere Fläche des Batteriezellenstapels (200), um eine Haftmittelschicht (120) zu bilden,
Bilden einer wärmeleitfähigen Harzschicht (1200) in einem unteren Packgehäuse (1110), welches eine Mehrzahl von Modulregionen aufweist, und
Anbringen des Batteriezellenstapels (200) in dem unteren Packgehäuse (1110), so dass die untere Fläche des Batteriezellenstapels (200) an der wärmeleitfähigen Harzschicht (1200) anliegt, wobei:
das Aufbringen eines Haftmittelmaterials ein Injizieren eines isolierenden Haftmittelsprays in Richtung der unteren Fläche des Batteriezellenstapels in einem Zustand umfasst, in welchem der Batteriezellenstapel kopfüber umgedreht ist.

8. Verfahren nach Anspruch 7, wobei:
die Mehrzahl von Modulregionen durch eine Mehrzahl von Trennwänden (1350) getrennt sind und der Batteriezellenstapel (200) zwischen den Trennwänden (1350), welche zueinander benachbart sind, angebracht ist.

9. Verfahren nach Anspruch 7, wobei:
eine Dicke der Haftmittelschicht (120) gebildet ist, um dünner als die Dicke der wärmeleitfähigen Harzschicht (1200) zu sein.

## Revendications

1. Bloc-batterie (1000) comprenant :
un empilement de cellules de batterie (200) qui est formé par empilement d'une pluralité de cellules de batterie (110),
une couche adhésive (120) qui est appliquée sur une surface inférieure de l'empilement de cellules de batterie (200),
un couvercle isolant (400) qui recouvre les deux parties d'extrémité de l'empilement de cellules de batterie (200), et
un élément de maintien (700) qui entoure les deux parties d'extrémité de l'empilement de cellules de batterie (200) adjacentes au couvercle isolant,
un boîtier de bloc inférieur (1110) qui présente une pluralité de régions de module sur l'une desquelles l'empilement de cellules de batterie (200) est monté, et
une couche de résine thermoconductrice (1200) formée sur le boîtier de bloc inférieur, dans lequel la couche adhésive (120) présente une propriété isolante et recouvre toute la surface inférieure de l'empilement de cellules de batterie (200), et
dans lequel un module de batterie contenant l'empilement de cellules de batterie (200), le couvercle isolant, l'élément de maintien (700) et la couche adhésive (120) est monté directement sur le boîtier de bloc inférieur, de sorte que la couche de résine thermoconductrice (1200) soit située entre la couche adhésive (120) et le boîtier de bloc inférieur, et que la couche adhésive (120) vienne en butée contre la couche de résine thermoconductrice (1200).

2. Bloc-batterie (1000) selon la revendication 1, dans lequel :
la couche de résine thermoconductrice (1200) entre en contact direct avec le boîtier de bloc inférieur.

3. Bloc-batterie (1000) selon la revendication 1, comprenant une pluralité d'empilements de cellules de batterie (200) et dans lequel :
la pluralité de régions de module sont séparées par une pluralité de parois de séparation (1350) formées à l'intérieur du boîtier de bloc inférieur, et les parois de séparation (1350) sont situées entre des empilements de cellules de batterie (200) adjacents parmi la pluralité d'empilements de cellules de batterie (200).

4. Bloc-batterie (1000) selon la revendication 3, dans lequel :
la couche de résine thermoconductrice (1200) comprend une première couche de résine thermoconductrice et une deuxième couche de résine thermoconductrice,
la pluralité de régions de module comprend une première région et une deuxième région qui sont séparées l'une de l'autre par la paroi de séparation,
la première couche de résine thermoconductrice est formée de manière à correspondre à la première région, et la deuxième couche de résine thermoconductrice est formée de manière à correspondre à la deuxième région.

5. Bloc-batterie (1000) selon la revendication 1, qui comprend en outre une pluralité d'empilements de cellules de batterie (200) et
un boîtier de bloc supérieur (1120) qui recouvre la pluralité d'empilements de cellules de batterie (200).

6. Bloc-batterie (1000) selon l'une quelconque des revendications précédentes, dans lequel la couche adhésive (120) est une couche adhésive pulvérisée.

7. Procédé de fabrication d'un bloc-batterie (1000), le procédé comprenant les étapes suivantes :
l'empilement d'une pluralité de cellules de batterie (110) pour former un empilement de cellules de batterie (200),
la formation d'un couvercle isolant qui recouvre les deux parties d'extrémité de l'empilement de cellules de batterie (200),
la formation d'un élément de maintien (700) qui entoure les deux parties d'extrémité de l'empilement de cellules de batterie (200) adjacentes au couvercle isolant,
l'application d'un matériau adhésif sur une surface inférieure de l'empilement de cellules de batterie (200) pour former une couche adhésive (120),
la formation d'une couche de résine thermoconductrice (1200) dans un boîtier de bloc inférieur (1110) présentant une pluralité de régions de module, et
le montage de l'empilement de cellules de batterie (200) dans le boîtier de bloc inférieur (1110) de sorte que la surface inférieure de l'empilement de cellules de batterie (200) vienne en butée contre la couche de résine thermoconductrice (1200),
dans lequel :
l'application d'un matériau adhésif comprend l'injection d'une pulvérisation d'adhésif isolant vers la surface inférieure de l'empilement de cellules de batterie dans un état dans lequel l'empilement de cellules de batterie est à l'envers.

8. Procédé selon la revendication 7, dans lequel :
la pluralité de régions de module sont séparées par une pluralité de parois de séparation (1350), et l'empilement de cellules de batterie (200) est monté entre les parois de séparation (1350) adjacentes les unes aux autres.

9. Procédé selon la revendication 7, dans lequel :
une épaisseur de la couche adhésive (120) est formée pour être plus fine que l'épaisseur de la couche de résine thermoconductrice (1200).
